# EUROPÄISCHE PATENTSCHRIFT

(11) **EP 1 091 991 B1**
(45) Veröffentlichungstag und Bekanntmachung des Hinweises auf die Patenterteilung: **19.11.2003**
(21) Anmeldenummer: 99929315.2
(22) Anmeldetag: 24.06.1999
(51) Int. Cl.: C08G 18/79, C08G 18/42, C08G 18/62

(54) **HOCHVISKOSE POLYISOCYANATE ENTHALTENDE ZUSAMMENSETZUNGEN**
COMPOSITIONS CONTAINING HIGHLY VISCOUS POLYISOCYANATES
COMPOSITIONS CONTENANT DES POLYISOCYANATES TRES VISQUEUX

(30) Priorität: 29.06.1998 DE 19828935
(43) Veröffentlichungstag der Anmeldung: 18.04.2001
(73) Patentinhaber: BASF AKTIENGESELLSCHAFT, 67056 Ludwigshafen (DE)
(72) Erfinder: BRUCHMANN, Bernd, D-67251 Freinsheim (DE); MOHRHARDT, Günter, D-67346 Speyer (DE); RENZ, Hans, D-67149 Meckenheim (DE); POTH, Ulrich, D-48163 Münster (DE); BAUMGART, Hubert, D-48163 Münster (DE); BITTER, Simone, D-48308 Senden (DE)
(74) Vertreter: Isenbruck, Günter
(86) Internationale Anmeldenummer: EP9904402
(87) Internationale Veröffentlichungsnummer: WO00000532

(56) Entgegenhaltungen:
- EP-A- 0 151 707
- EP-A- 0 531 249
- EP-A- 0 566 954

## Beschreibung

Die Erfindung betrifft eine Zusammensetzung enthaltend mindestens ein im wesentlichen von Allophanatgruppen freies Isocyanat mit einer mittleren Funktionalität von mehr als 3,5 und einer Viskositat von 4.000 mPas bis 50.000 mPas bei 20°C bis 50°C und mindestens eine Verbindung mit mehr als mindestens 5 gegenüber Isocyanaten unter Harnstoff- oder Urethanbildung reaktionsfähigen funktionellen Gruppen, die zu Polyurethanen mit verbesserter Härte, Kratzfestigkeit und Säurebeständigkeit bei gutem "Reflow-Verhalten" führt. Weiterhin betrifft die Erfindung ein Verfahren zur Herstellung einer solchen Zusammensetzung sowie die Verwendung bestimmter Polyisocyanatoisocyanurate zur Herstellung solcher Zusammensetzungen.

Bei Polyurethanlacken, insbesondere wenn sie im Automobil- oder Möbelsektor eingesetzt werden sollen, wird in der Regel besonderer Wert auf die Beständigkeit solcher Lacke gegenüber unterschiedlichen Umwelteinflüssen gelegt. Häufig zur Bewertung solcher Lacke herangezogene Kriterien sind beispielsweise deren Härte, die Kratz- und Säurebeständigkeit aber auch das "Reflow-Verhalten".

Unter dem "Reflow-Verhalten" wird die Fähigkeit eines ausgehärteten Oberflächenüberzugs (Lacks) verstanden, kleinere Schadstellen (im µm-Bereich), die durch Kratz- oder Schlageinwirkung auf den Lack entstanden sind, durch kalten Fluß des Lacks in die Schadstelle wieder auszugleichen.

Zur Verbesserung der Kratzbeständigkeit wurden in der Vergangenheit häufig oligomere Polyrisocyanatoisocyanurate auf Basis des Hexamethylendiisocyanats (HDI) als Isocyanatkomponente eingesetzt. Die daraus hergestellten Polyurethanlacke sind in der Regel weich und verfügen daher über ein gutes "Reflow-Verhalten". Nachteilig an solchen Lacken ist jedoch ihre mangelhafte Säurebeständigkeit.

Harte und säurebeständige Polyurethanlacke werden in der Regel dann erhalten, wenn als Polyisocyanatkomponente beispielsweise IPDI oder die oligomeren Polyisocyanatoisocyanurate des IPDI eingesetzt werden. Die Kratzbeständigkeit und das "Reflow-Verhalten" solcher Produkte sind jedoch in der Regel nicht ausreichend. Ein weiterer Nachteil der Produkte auf Basis von IPDI ist, im Hinblick auf eine Anwendung im großen Maßstab bei der Erzeugung von Massengütern, auch deren, im Vergleich zu HDI, hoher Preis.

Es bestand daher die Aufgabe eine Zusammensetzung zur Verfügung zu stellen, die sich als Polyurethanlack einsetzen läßt und nach dem Aushärten Oberflächenbeschichtungen mit guter Härte, Kratz- und Säurebeständigkeit bei gutem "Reflow-Verhalten" ergibt.

Die CA-A 2,163,591 betrifft Polyisocyanatgemische die Allophanat- und Isocyanuratgruppen aufweisen. Zur Herstellung solcher Isocyanatverbindungen wird beispielsweise zu einer geeigneten Menge Hexamethylendiisocyanat eine bestimmte Menge eines Monoalkohols mit einem Molekulargewicht von bis zu etwa 2.500 g/mol gegeben. Bei der anschließenden thermischen Behandlung einer solchen Mischung entstehen die entsprechenden Allophanatgruppen enthaltenden Polyisocyanate. Die Umsetzung mit Monoalkoholen führt jedoch zu Polyisocyanaten, deren Isocyanatgruppengehalt pro Molekül (bezogen auf das Molekulargewicht) geringer ist, als der Isocyanatgruppengehalt von Polyisocyanaten, die ohne Zugabe von Monoalkoholen hergestellt wurden. Durch diese verringerte Anzahl an Isocyanatgruppen pro Molekül wird die zur Netzwerkbildung benötigte Funktionalität herabgesetzt, so daß eine geringere Netzwerkdichte unter Einbuße der gewünschten Eigenschaften resultiert. Die Druckschrift gibt weiterhin keinen Aufschluß über das "Reflow-Verhalten" von Oberflächenbeschichtungen, die mit allophanatgruppenhaltigen Isocyanaten hergestellt wurden sowie deren Säurebeständigkeit.

Die US-A 4,419,513 betrifft gemischte Isocyanurate, die durch gemischte Trimerisierung von HDI und IPDI erhältlich sind. Es wird ausgeführt, daß die beschriebenen gemischten Trimerisate wünschenswerte Eigenschaften in Bezug auf.

Härte und Elastizität aufweisen. Nachteilig wirkt sich bei diesen gemischten Trimerisaten aus, daß durch den Anteil an IPDI der Gehalt an Isocyanatgruppen (bezogen auf das Molekulargewicht) geringer ist als bei reinen HDI-Trimerisaten, was ökonomische Nachteile mit sich bringt.

Die US-A 4,454,317 erwahnt Polyisocyanatoisocyanurate, die beispielsweise durch Trimerisierung von HDI erhältlich sind. Beispielhaft beschrieben wird ein HDI-Trimerisat mit einem NCO-Gehalt von 20,8 % und einer Viskosität von 14 Pas bei Raumtemperatur. Über die Möglichkeit, aus solchen Polyisocyanatoisocyanuraten in Kombination mit geeigneten Polyolen Polyurethane mit verbesserter Chemikalienbeständigkeit herzustellen, wird in der Druckschrift nichts ausgesagt.

Die EP-A 0 646 608 betrifft Polyisocyanate, die sich durch cyclische Trimerisierung mindestens eines aliphatischen oder alicyclischen Diisocyanats entweder nach seiner Reaktion mit einem polyfunktionellen Alkohol oder durch Trimerisierung in Gegenwart eines solchen Alkohols erhalten lassen. Solche Isocyanate weisen zwar hohe Viskositäten auf, durch den Anteil an polyfunktionellem Alkohol im hergestellten Polyisocyanatmolekül sinkt jedoch der Gewichtsanteil an Isocyanatgruppen pro Molekül. Dies erfordert. bei der Verwendung des Polyisocyanats eine ökonomisch unerwünschte höhere Einsatzmenge an Isocyanat.

Die US-A 4,801,675 betrifft Polyisocyanatoisocyanurate mit einem Isocyanatgehalt von 10 bis 30 Gew.-% und deren Umsetzung mit Polyolen, die eine durchschnittliche Funktionalität von 1,8 bis 5 aufweisen.

Es war nun Aufgabe der vorliegenden Erfindung, eine Zusammensetzung zur Verfügung zu stellen, die über ausgezeichnete Härte, Kratzfestigkeit und Säurebeständigkeit in Verbindung mit einem guten "Reflow-Verhalten" verfügt. Es wurde nun festgestellt, daß eine Zusammensetzung, die mindestens ein im wesentlichen von Allophanatgruppen freies Polyisocyanatoisocyanurat mit einer mittleren NCO-Funktionalität von mehr als 3,5 und einer Viskosität von mehr als 4.000 mPas bis zu 50.000 mPas bei 20°C bis 50°C und mindestens eine Verbindung mit durchschnittlich mehr als 5 gegenüber Isocyanaten unter Harnstoff- oder Urethanbildung reaktionsfähigen funktionellen Gruppen enthält, zu Oberflächenbeschichtungen führt, die eine ausgezeichnete Härte, Kratzbeständigkeit und insbesondere Säurebeständigkeit bei gleichzeitig gutem "Reflow-Verhalten" aufweisen.

Gegenstand der Erfindung ist daher eine Zusammensetzung, enthaltend Komponenten A und B, wobei
a) mindestens ein im wesentlichen von Allophanatgruppen freies Polyisocyanatoisocyanurat mit einer mittleren NCO-Funktionalität von mehr als 3,5 und einer Viskosität von mehr als 4.000 mPas bis zu 50.000 mPas bei 20°C bis 50°C, gemessen mit einem Rotationsviskosimeter gemäß DIN 53019, als Komponente A und
b) mindestens eine Verbindung mit durchschnittlich mehr als 5 gegenüber Isocyanaten unter Harnstoff-, Urethan-, Thiourethan- oder Amidbildung reaktionsfähigen funktionellen Gruppen als Komponente B,
enthalten ist.

Unter dem Begriff "im wesentlichen von Allophanatgruppen frei" werden Verbindungen verstanden, deren Anteil an Allophanatgruppen im Verhältnis zu Isocyanuratgruppen weniger als 10% beträgt.

Unter einem "Polyisocyanatoisocyanurat" wird eine Verbindung verstanden, die über wenigstens einen Isocyanurat-Ring und mindestens 2, vorzugsweise jedoch mindestens 3 Isocyanatgruppen verfügt. Die Zahl der Isocyanurat-Ringe und die NCO-Funktionalität berechnet sich dabei immer als Durchschnitt des gesamten als Komponente A eingesetzten Gemischs von Verbindungen. Da bei der Trimerisierung von Diisocyanaten in der Regel keine reinen Produkte, sondern Verbindungen mit unterschiedlichen Oligomerisierungsgraden entstehen, läßt sich die Funktionalität der entstandenen Verbindungen lediglich als Durchschnittswert angeben.

Es ist bekannt, daß Isocyanate mit Hilfe von Katalysatoren in Isocyanurate überführt werden können.

In der Literatur werden zahlreiche Katalysatoren für die Cyclisierung von Isocyanaten zu Isocyanuraten beschrieben. Beispiele für solche Katalysatoren sind starke Basen wie quaternäre Ammoniumhydroxyde, beispielsweise Benzyltrimethylammoniumhydroxyd, Alkalimetallhydroxyde, beispielsweise Natrium- oder Kaliumhydroxyd, Alkalimetallalkoxide, beispielsweise Natriummethylat oder Kaliumisopropylat, Trialkylphosphine, beispielsweise Triethylphosphin, Alkylaminoalkylphenole, beispielsweise 2,4,6-Tris-(Dimethylaminomethyl)phenol, 3- oder 4-substituierte Pyridine, oder deren Gemische, beispielsweise 3- oder 4-Methylpyridin, metallorganische Salze, beispielsweise Tetrakis-(hydroxyethyl)-natriumborat, Friedel-Crafts Katalysatoren, beispielsweise Aluminiumchlorid, Eisen(III)chlorid, Bortrifluorid und Zinkchlorid sowie Alkalimetallsalze von schwachen organischen Säuren und Nitrophenolaten, beispielsweise Kaliumoctoat, Kalium-2-ethylhexoat, Kaliumbenzoat, Natriumpikrat und Phthalimidkalium. Ebenfalls geeignet sind die quaternären N-(Hydroxyalkyl)ammoniumsalze organischer Säuren, wie sie beispielsweise in der US-A 4,454,317 beschrieben sind.

Um organische Polyisocyanate zu Polymerisationsprodukten mit Isocyanurat-struktur und freien NCO-Gruppen zu polymerisieren, ist es notwendig, die Isocyanuratbildung nach Erreichen des gewünschten Polymerisationsgrades abzubrechen. Dies wird in der Regel durch Zersetzung beziehungsweise Neutralisation der Katalysatoren erreicht. Wenn beispielsweise ein basischer Katalysator eingesetzt wird, kann die Reaktion durch Zugabe einer wenigstens der Katalysatormenge äquivalenten Menge einer Säure, z.B. p-Toluolsulfonsäure, oder eines Säurechlorids, beispielsweise Benzoylchlorid, abgebrochen werden. Wenn ein wärmeempfindlicher Katalysator eingesetzt wird, beispielsweise ein quaternäres Ammoniumhydroxyd, kann die Reaktion ohne Zugabe eines Katalysatorgifts unterbrochen werden, indem die Reaktionsmischung auf eine Temperatur erhitzt wird bei welcher der Katalysator zerstört wird. Weiterhin ist es möglich einen Katalysator einzusetzen, der auf einem Trägermaterial aufgebracht ist.

Ein solcher Katalysator läßt sich im Anschluß an die Umsetzung beispielsweise durch gängige Fest-Flüssig-Trennmethoden, beispielsweise durch Filtration oder Zentrifugation, aus dem Reaktionsgemisch entfernen.

Beispiele für geeignete quaternäre Ammoniumhydroxyde sind Tetramethyl-, Tetraethyl-, Trimethylstearyl-, Dimethyl-, Ethyl- oder Cyclohexylammoniumhydroxyd, N,N,N-Trimethyl-N-(2-hydroxyethyl)-, N,N,N-Trimethyl-N-(2-hydroxypropyl)-, N,N,N-Trimethyl-N-(2-hydroxybutyl)-, N,N-Dimethyl-N-dodecyl-N-(2-hydroxyethyl)-oder N-(2-Hydroxyethyl)-N,N-dimethyl-N-(2,2-di-hydroxymethyl-butyl)-ammoniumhydroxyd; N-Methyl-2-hydroxyethyl-morpholiniumhydroxyd; N-Methyl-N-(2-hydroxypropyl)-pyrrolidiniumhydroxyd; N-Do-decyl-tris-N-(2-hydroxyethyl)-ammoniumhydroxyd; Tetra-(2-hydroxyethyl)-ammoniumhydroxyd; sowie die Salze der genannten Ammoniumionen mit anderen Anionen als den genannten OH-Ionen, sowie Gemische aus zwei oder mehr der genannten Verbindungen. Als Gegenionen sind beispielsweise die Anionen organischer Carbonsäuren mit 1 bis etwa 20 C-Atomen geeignet. Beispielsweise sind dies die Anionen der Ameisensäure, Essigsäure, Propansäure, Butansäure, Pentansäure, Hexansäure, Heptansäure, Capronsäure, Caprylsäure, Caprinsäure, Laurinsäure, Myristinsäure, Palmitinsäure oder Stearinsäure. In einer bevorzugten Ausführungsform der vorliegenden Erfindung wird das Anion der 2-Ethylhexansäure als Gegenion eingesetzt.

Die Trimerisierungskatalysatoren werden in der Regel in einer Menge von 0,0001 bis etwa 5 Gew.%, insbesondere von etwa 0,001 bis etwa 2 Gew.-%, bezogen auf die eingesetzten Diisocyanate, eingesetzt. In einer bevorzugten Ausführungsform können die Katalysatoren beispielsweise in einer Menge von etwa 0,005 bis etwa 1,5, insbesondere in einer Menge von etwa 0,01 bis etwa 1 Gew.% eingesetzt werden.

Als Isocyanate können grundsätzlich alle Diisocyanate eingesetzt werden deren Trimerisierung zu Produkten führt, welche die erfindungsgemäß geforderten Eigenschaften in Bezug auf Funktionalität und Viskosität aufweisen. Insbesondere sind dies 1,2-Ethylendiisocyanat, 1,4-Tetramethylendiisocyanat, 1,6-Hexamethylendiisocyanat (HDI), 2,2,4- oder 2,4,4-Trimethyl-1,6-hexamethylendiisocyanat (TMHDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanatomethyl-3,5,5-trimethylcyclohexylisocyanat (Isophorondiisocyanat, IPDI), 1,3- und 1,4-Diisocyanatomethylcyclohexan, 2,4- und 2,6-Hexahydrotoluylendiisocyanat, Perhydro-2,2', -2,4'- und -4,4'-diphenylmethandiisocyanat, 4,4'-Diisocyanato-3,3',5,5'-tetramethyldicyclohexylmethan oder ω,ω'-Diisocyanato-1,4-diethylbenzol.

Vorzugsweise werden jedoch lineare oder verzweigte aliphatische oder cycloaliphatische, insbesondere lineare aliphatische Diisocyanate eingesetzt. Besonders bevorzugt ist ein Polyisocyanatoisocyanurat wie es sich durch Trimerisierung von HDI erhalten läßt.

Die als Komponente A einsetzbaren Isocyanatverbindungen weisen vorzugsweise eine Funktionalität von 4,0 bis 7,0, insbesondere 4,2 bis 6,5 auf

Zur Herstellung der als Komponente A einsetzbaren Polyisocyanatoisocyanurate werden die oben genannten Diisocyanate oder Mischungen aus zwei oder mehr der oben genannten Diisocyanate bei etwa 0°C bis etwa 150°C mit einem entsprechenden Katalysator versetzt. Anschließend läßt man bei diesen Temperaturen, vorzugsweise jedoch bei 10°C bis 100°C, insbesondere bei etwa 20°C bis etwa 80°C so lange reagieren, bis die gewünschte NCO-Zahl erreicht ist. Üblicherweise liegt die erforderliche Reaktionszeit zwischen etwa 0,1 und etwa 16 Stunden, beispielsweise zwischen etwa 0,25 und etwa 4 Stunden. Die Umsetzung kann in Abwesenheit oder in Gegenwart organischer Lösemittel durchgeführt werden. Als Lösemittel sind gegenüber Isocyanaten inerte Lösemittel geeignet. Beispielsweise sind dies Methylenchlorid, Chloroform, Chlorbenzol, Aceton, Methylethylketon, Ethylacetat, Butylacetat, Tetrahydrofuran, Dioxan, Toluol oder Xylol oder Gemische aus zwei oder mehr davon.

Nach Erreichen der gewünschten NCO-Zahl bricht man die Reaktion durch einen den Katalysator deaktivierenden Zusatz ab oder deaktiviert den Katalysator auf andere Weise, beispielsweise durch Erhitzen.

Als Desaktivierungsmittel (Katalysatorgift) eignen sich unter anderem starke Säuren oder Carbonsäurehalogenide. Genannt seien hierbei beispielsweise Sauren wie Phosphorsaure, Salzsäure oder p-Toluolsulfonsaure sowie Carbonsäurehalogenide wie Acetylchlorid, Benzoylchlorid oder Toluolsulfonsäurechlorid oder Gemische aus zwei oder mehr davon. Im allgemeinen wird die Umsetzung durch Zusatz von etwa 1 bis etwa 20 Säure- oder Säurehalogenidäquivalenten pro Äquivalent Katalysator wirksam beendet.

Nach Abbruch der Reaktion werden üblicherweise die nicht umgesetzten monomeren Diisocyanate und gegebenenfalls die Lösemittel unter schonenden Bedingungen entfernt. Dies läßt sich beispielsweise durch Vakuumdestillation in geeigneten Verdampfern oder durch Extraktion mit geeigneten Lösemitteln erreichen, in denen nur die monomeren Diisocyanate, nicht jedoch die tri- oder polymeren Polyisocyanate oder deren Gemische löslich sind, z.B. mit aliphatischen oder cycloaliphatischen Kohlenwasserstoffen.

Der Restmonomergehalt der als Komponente A eingesetzten Polyisocyanatopolyisocyanurate liegt vorzugsweise bei weniger als etwa 2 Gew.%, insbesondere bei weniger als etwa 1 Gew.%. In einer besonders bevorzugten Ausführungsform der vorliegenden Erfindung werden als Komponente A Polyisocyanatopolyisocyanurate eingesetzt, die einen Restmonomergehalt von weniger als etwa 0,5 Gew.% aufweisen.

Als Komponente B enthalten die erfindungsgemäßen Zusammensetzungen mindestens eine Verbindung mit durchschnittlich mehr als 5 gegenüber Isocyanaten unter Harnstoff- oder Urethanbildung reaktionsfähigen funktionellen Gruppen. Unter dem "durchschnittlichen Gehalt" an gegenüber Isocyanaten unter Harnstoff- oder Urethanbildung reaktionsfähigen funktionellen Gruppen wird auf die Gesamtheit der als Komponente B eingesetzten Verbindungen abgestellt. Die Komponente B kann demnach beispielsweise nur aus Verbindungen bestehen von denen jedes einzelne Molekül die geforderte Funktionalität aufweist. Als Komponente B kann jedoch auch ein Gemisch aus Verbindungen eingesetzt werden, das Verbindungen oder ein Gemisch aus zwei oder mehr Verbindungen enthält, deren Moleküle weniger als 5 gegenüber Isocyanaten unter Harnstoff- oder Urethanbildung reaktionsfähige Gruppen enthalten Es muß in einem solchen Fall lediglich gewährleistet sein, daß die Gesamtheit der in Komponente B enthaltenen Verbindungen die geforderte durchschnittliche Funktionalität erfüllt.

Komponente B kann demnach auch Verbindungen enthalten, die eine Funktionalität gegenüber Isocyanaten von zwei, drei, vier oder fünf aufweisen. Als funktionell gegenüber Isocyanaten gelten beispielsweise Verbindungen, die funktionelle Gruppen ausgewählt aus der Gruppe bestehend aus -OH, -SH, -R-NH oder -COOH oder ein Gemisch aus zwei oder mehr davon aufweisen, wobei R für Wasserstoff oder einen linearen oder verzweigten, gesättigten oder ungesättigten Alkylrest mit 1 bis etwa 12 C-Atomen oder einen linearen oder verzweigten, gesättigten oder ungesättigten Cycloalkylrest mit 3 bis etwa 12 C-Atomen steht.

In einer bevorzugten Ausführungsform der Erfindung enthält Komponente B Verbindungen, die als funktionelle Gruppen R-NH- oder OH-Gruppen oder beides aufweisen, wobei R die oben genannte Bedeutung hat. Es ist jedoch besonders bevorzugt, wenn die als Komponente B eingesetzten Verbindungen als mit Isocyanaten reaktive funktionelle Gruppen OH-Gruppen aufweisen. Solche Verbindungen werden im folgenden Text als "Polyole" bezeichnet.

In einer bevorzugten Ausführungsform der Erfindung werden als Komponente B Polyole eingesetzt, die ein Molekulargewicht (Mₙ) von etwa 62 bis etwa 500.000, insbesondere etwa 300 bis etwa 40.000 und besonders bevorzugt etwa 1.000 bis etwa 25.000 g/mol aufweisen.

Beispiele für niedermolekulare Verbindungen sind Ethylenglykol, Propylenglykol, Butylenglykol, Propandiol, Pentandiol, Hexandiol, Heptandiol, Octandiol und deren höhere Homologen, Glycerin, Trimethylolpropan, Triethylolpropan, Pentaerythrit, Pentosen oder Hexosen wie Glukose oder Sorbit sowie Oligo- oder Polysaccharide wie Saccharose oder Maltose, oder Gemische aus zwei oder mehr der genannten Verbindungen.

Weiterhin zum Einsatz in Komponente B geeignet sind Umsetzungsprodukte der genannten Verbindungen mit sich selbst oder Umsetzungsprodukte eines Gemisches aus zwei oder mehr der genannten Verbindungen, beispielsweise Polyethylenglykol oder Polypropylenglykol mit einem Polymerisationsgrad von zwei bis etwa 1.000. Ebenfalls geeignet sind die Umsetzungsprodukte der oben genannten Verbindungen mit einem Alkylenoxid mit zwei bis etwa 10 C-Atomen oder einem Gemisch aus zwei oder mehr solcher Alkylenoxide, beispielsweise mit Ethylenoxid, Propylenoxid oder Butylenoxid oder einem Gemisch aus zwei oder mehr davon.

Zum Einsatz in Komponente B sind außerdem Verbindungen geeignet und notwendig, die zumindest durchschnittlich 5 oder mehr funktionelle Gruppen aus der Gruppe bestehend aus -OH, -SH, -R-NH oder -COOH oder ein Gemisch aus zwei oder mehr davon aufweisen. Hierbei hat R die oben genannte Bedeutung. Vorzugsweise handelt es sich bei den in Komponente B einsetzbaren Verbindungen um Verbindungen, die wenigstens überwiegend OH-Gruppen als gegenüber Isocyanaten reaktionsfähigen funktionellen Gruppen aufweisen.

Geeignet sind im Rahmen der vorliegenden Erfindung zum Einsatz als Komponente B beispielsweise Polyole auf Basis von Acryl- oder Methacrylsäure. Solche (Meth)Acrylatpolyole umfassen beispielsweise diejenigen Polyole die durch Copolymerisation polymerisierbarer (Meth)Acrylmonomere mit einem oder mehr gegenüber Isocyanaten reaktiven Wasserstoffatomen in einem Molekül erhältlich sind. Beispiele für solche (Meth)Acrylmonomere mit einem oder mehr gegenüber Isocyanaten reaktiven Wasserstoffatomen sind beispielsweise 2-Hydroxyethyl(meth)acrylat, 2-Hydroxypropyl(meth)acrylat, 2-Hydroxybutyl(meth)acrylat, 2-Hydroxydiethyl(meth)-acrylat, 2-Hydroxy-propyl(meth)acrylat, oder 2-Hydroxybutyl(meth)acrylat. Weiterhin sind (Meth)Acrylsäureester mit mehreren gegenüber Isocyanaten reaktiven Gruppen geeignet wie sie sich durch Umsetzung von (Meth)Acrylsäure mit Verbindungen mit zwei oder mehr gegenüber Isocyanaten reaktiven Gruppen im Unter-schuß erhalten lassen. Beispielsweise sind dies die (Meth)Acrylsäuremono- oder -diester von Glycerin, Trimethylolpropan, Triethylolpropan oder Pentaerythrit, von Sacchariden wie Glukose, Mannit oder Sorbit oder von Oligo- oder Polysacchariden wie Saccharose oder Maltose sowie Gemische aus zwei oder mehr der genannten Verbindungen.

Als Comonomere sind beispielsweise Methyl(meth)acrylat, Isopropyl(meth)acrylat, n-Butyl(meth)acrylat, 2-Ethylhexyl(meth)acrylat, Isobutyl(meth)acrylat, N-Hexyl(meth)acrylat, Cyclohexyl(meth)acrylat, Lauryl(meth)acrylat oder Glycidyl(meth)acrylat geeignet.

Gegebenenfalls können bei der Polymerisation noch weitere Monomere vorliegen, z. B. ungesättigte Carbonsäuren wie Acrylsäure, Methacrylsäure, Maleinsäure oder Itaconsäure oder ungesättigte Amide wie Acrylamid, n-Methylolacrylamid oder Diacetonacrylamid, Styrol, Vinyltoluol, Vinylacetat oder Acrylnitril oder Gemische aus zwei oder mehr der genannten Verbindungen.

Die Herstellung der Polymerisate erfolgt nach üblichen Methoden der Polymerchemie, beispielsweise durch Peroxid-initiierte Lösungspolymerisation, Emulsionspolymerisation oder Suspensionspolymerisation.

In einer bevorzugten Ausführungsform der Erfindung ist als Komponente B ein Polyester, Polyacrylat, Polymethacrylat, oder ein Gemisch aus zwei oder mehr davon, enthalten.

Ebenfalls als Komponente B einsetzbar sind Polyetherpolyamine oder Polyole ausgewählt aus der Gruppe der Polyetherpolyole, Polyesterpolyole, Polythioetherpolyole, Polyesteramide, OH-Gruppen aufweisenden Polyacetale und OH-Gruppen aufweisenden aliphatischen Polycarbonaten oder Mischungen aus zwei oder mehr der genannten Polyole. Die Hydroxylzahl der Polyhydroxy-verbindungen beträgt dabei in aller Regel 15 bis 850 mg KOH/g und vorzugsweise 20 bis 600 mg KOH/g.

Geeignete Polyesterpolyole können beispielsweise aus organischen Dicarbonsäuren mit 2 bis 12 Kohlenstoffatomen, vorzugsweise aus aliphatischen Dicarbonsäuren mit 4 bis 6 Kohlenstoffatomen, und mehrwertigen Alkoholen mit 2 bis 12 Kohlenstoffatomen hergestellt werden. Als Dicarbonsäuren kommen beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure oder Terephthalsäure oder Gemische aus zwei oder mehr davon in Betracht. Die Dicarbonsäuren können auch als entsprechende Dicarbonsäurederivate, z.B. als Dicarbonsäureester von Alkoholen mit 1 bis 4 Kohlenstoffatomen oder als Dicarbonsäureanhydride eingesetzt werden.

Vorzugsweise werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für mehrwertige Alkohole sind Ethandiol, Diethylenglykol, 1,2- bzw. 1,3- Propandiol, Dipropylenglykol, 1,4-Butandiol, 1,5-Pentandiol, 1,6-Hexandiol, 1,10-Decandiol, Glycerin und Trimethylolpropan. Eingesetzt werden können ferner Polyesterpolyole aus Lactonen, z.B. aus ε-Caprolacton, oder aus Hydroxycarbonsäuren, z.B. aus ω-Hydroxycapronsäure.

Zur Herstellung der als Bestandteil von Komponente B einsetzbaren Poly-esterpolyole können die organischen Polycarbonsäuren oder deren Derivate oder beides enthaltende Gemische zusammen mit den mehrwertigen Alkoholen katalysatorfrei oder vorzugsweise in Gegenwart von Veresterungskatalysatoren polykondensiert werden. Zweckmäßigerweise geschieht dies in einer Atmosphäre aus Inertgas, z.B. Stickstoff, Helium oder Argon. Die Polykondensation findet beispielsweise in der Schmelze bei Temperaturen von etwa 150 bis etwa 250°C, vorzugsweise etwa 180 bis etwa 220°C statt, wobei gegebenenfalls unter vermindertem Druck gearbeitet wird. Die Reaktion wird bis zu der gewünschten Säurezahl, die vorteilhafterweise kleiner als 10, vorzugsweise kleiner als 2 ist, fortgeführt.

Die Polykondensation kann beispielsweise bei den obengenannten Temperaturen bis zu einer Säurezahl von etwa 80 bis etwa 30 unter Normaldruck und anschließend unter einem Druck von kleiner als 500 mbar, beispielsweise 50 bis 150 mbar, durchgeführt werden. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, z.B. Benzol, Toluol, Xylol oder Chlorbenzol durchgeführt werden.

Zur Herstellung der als Komponente B einsetzbaren Polyesterpolyole werden die organischen Polycarbonsäuren und/oder -derivate und mehrwertigen Alkohole vorteilhafterweise im Molverhältnis von etwa 1:1 bis etwa 1:8, vorzugsweise etwa 1:1,5 bis etwa 1:2, polykondensiert.

Die erhaltenen Polyesterpolyole besitzen beispielsweise ein Molekulargewicht (Mₙ) von 480 bis 10.000, vorzugsweise 600 bis 5.000 und insbesondere 600 bis 3.000.

Ebenfalls als Polyole einsetzbar sind Polyetherpolyole, die nach bekannten Verfahren, beispielsweise durch anionische Polymerisation von cyclischen Ethem mit Alkalihydroxiden wie Natrium- oder Kaliumhydroxid oder mit Alkalialkoholaten, z.B. Natriummethylat, Natrium- oder Kaliumethylat oder Kaliumisopropylat, als Katalysatoren und unter Zusatz mindestens eines Startermoleküls, das beispielsweise etwa 2 bis etwa 8 reaktive Wasserstoffatome enthält, hergestellt werden können. Ebenfalls einsetzbar sind Polyetherpolyole, die durch kationische Polymerisation von cyclischen Ethem mit Lewissäuren wie Antimonpentachlorid, Bortrifluorid-Etherat u.a. oder Bleicherde als Katalysatoren hergestellt werden.

Geeignete cyclische Ether sind beispielsweise Tetrahydrofuran, 1,3-Propylenoxid, 1,2-bzw. 2,3-Butylenoxid, Styroloxid, Ethylenoxid oder 1,2-Propylenoxid oder Gemische aus zwei oder mehr davon. Als Startermoleküle kommen beispielsweise Wasser, organische Dicarbonsäuren wie Bemsteinsäure, Adipinsäure, Phthalsäure oder Terephthalsäure sowie aliphatische und aromatische, gegebenenfalls N-mono-, N,N- und N,N'dialkylsubstituierte Diamine mit 1 bis 20 Kohlenstoffatomen im Alkylrest in Betracht. Geeignete Verbindungen der letztgenannten Verbindungsklasse sind beispielsweise gegebenenfalls mono- oder dialkylsubstituiertes Ethylendiamin, Diethylentriamin, Triethylentetramin, 1,3-Propylendiamin, 1,3-bzw 1,4-Butylendiamin, 1,2-, 1,3-, 1,4-, 1,5- und 1,6- Hexamethylendiamin, Phenylendiamine, 2,3-, 2,4- und 2,6-Toluylendiamin oder 4,4'-, 2,4'- und 2,2'-Diamino-diphenylmethan.

Als Startermoleküle kommen ferner in Betracht: Alkanolamine, z.B. Etha-nolamin, N-Methyl- und N-Ethyl-ethanolamin, Dialkanolamine wie Diethanolamin, N-Methyl- und N-Ethyl-diethanolamin und Trialkanolamine, beispielsweise Triethanolamin, sowie Ammoniak. Vorzugsweise werden mehrwertige Alkohole wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose als Startermoleküle verwendet.

Als Polyetherpolyole zum erfindungsgemäßen Einsatz in Komponente B eignen sich ferner polymermodifizierte Polyetherpolyole, vorzugsweise Pfropfpolyetherpolyole, insbesondere solche auf Styrol- oder Acrylnitrilbasis, die durch *in-situ* Polymerisation von Acrylnitril, Styrol oder vorzugsweise von Gemischen aus Styrol und Acrylnitril, z.B. im Gewichtsverhältnis 90 : 10 bis 10 : 90, in den vorgenannten Polyetherpolyolen analog den Angaben der deutschen Patentschriften 11 394, 12 22 669 (US 3 304 273, 3 383 351, 3 523 093), 11 52 536 (GB 10 40 452) und 11 52 537 (GB 987 618) hergestellt werden.

Die Polyetherpolyole können ebenso wie die Polyesterpolyole einzeln oder als Gemische verwendet werden. Ferner können sie mit den Pfropfpolyetherpolyolen oder Polyesterpolyolen sowie OH-Gruppen aufweisenden Polyesteramiden, Polyacetalen, Polycarbonaten und/oder Polyetherpolyaminen gemischt werden.

Als OH-Gruppen aufweisende Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als OH-Gruppen aufweisende Polycarbonate kommen solche in Betracht, die beispielsweise durch Umsetzung von polyfunktionellen Alkoholen wie Propandiol-1,3, Butandiol-1,4 oder Hexandiol-1,6, Diethylenglykol, Triethylenglykol, Tetraethylenglykol, Glycerin, Trimethylolpropan, Triethylolpropan, Pentaerythrit, Oligo- oder Polyglycerin, Oligo- oder Polysacchariden mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den obengenannten Polyetherpolyolen nach bekannten Verfahren hergestellt werden. Beispielhaft seien die Cyanoalkylierung von Polyoxyalkylen-polyolen und anschließende Hydrierung des gebildeten Nitrils (z.B. US 3 267 050 9) oder die teilweise oder vollständige Aminierung von Polyoxyalkylenpolyolen mit Aminen oder Ammoniak in Gegenwart von Wasserstoff und Katalysatoren (z.B. DE 12 15 373) genannt.

In einer bevorzugten Ausführungsform der Erfindung werden zur Herstellung der Polyurethane wenigstens anteilig Polyole eingesetzt, deren mittlere Zahl der OH-Gruppen pro Molekül vier oder mehr beträgt. In einer weiteren bevorzugten Ausführungsform beträgt die mittlere Funktionalität der Komponente B mehr als 10.

In einer bevorzugten Ausführungsform der Erfindung beträgt die Viskosität der Komponente B bei 23°C mehr als etwa 8.000 mPas.

Neben der Komponente A und der Komponente B kann die erfindungsgemäße Zusammensetzung weitere Zusatzstoffe enthalten. Hierzu zählen beispielsweise weitere polymere Verbindungen wie Melaminharze, beispielsweise Hexamethoxymethylolmelamin, methylierte oder butylierte Melamine oder deren Gemische.

Weiterhin können die erfindungsgemäßen Zusammensetzungen noch Lösemittel und Additive enthalten.

Als Lösemittel sind beispielsweise Toluol, Xylol, Cyclohexan, Mineralöle oder Naphta geeignet, Ketone wie Aceton, Methylethylketon oder Methylisobutylketon, Ester wie Ethylacetat, n-Butylacetat oder Cellosolvacetat oder Gemische aus zwei oder mehr der genannten Lösemittel.

Als Additive können gewünschtenfalls Beschleuniger enthalten sein. Zu den Beschleunigern zählen beispielsweise Organometallverbindungen, wie die Organometallverbindungen von Zinn, Zink oder Blei. Weiterhin können als Additive Antioxidantien enthalten sein. Hierzu zählen beispielsweise sterisch gehinderte Phenole, UV-Absorber wie Benzotriazole oder Benzophenone.

Weiterhin können Farbstoffe oder Pigmente als Additive enthalten sein. Hierzu zählen beispielsweise Titandioxid, Ruß, Indigo, Chinacridone, Talcum oder metallische Pulverpigmente wie Aluminium.

Weiterhin können die erfindungsgemäßen Zusammensetzungen rheologische Additive wie Hydroxymethylcellulose, Hydroxyethylcellulose oder Harnstoffverbindungen oder deren Gemisch enthalten.

Die erfindungsgemäßen Zusammensetzungen enthalten die Komponente A in einer Menge von etwa 5 Gew.-% bis etwa 95 Gew.-%, bezogen auf die gesamte Zusammensetzung. Die Komponente B ist in den erfindungsgemäßen Zusammensetzungen in einer Menge von etwa 95 Gew.-% bis etwa 5 Gew.-% enthalten.

Das Verhältnis von NCO-Gruppen aus Komponente A zu OH-Gruppen aus Komponente B beträgt vorzugsweise etwa 0,6 bis 1,4, insbesondere etwa 0,9 bis etwa 1,1.

Zusatzstoffe, Lösemittel oder Additive können insgesamt in einer Menge von bis zu etwa 80 Gew.-% enthalten sein, vorzugsweise etwa 0 Gew.-% bis etwa 70 Gew.-%.

Ebenfalls Gegenstand der Erfindung ist die Verwendung mindestens eines im wesentlichen allophanatgruppenfreien Polyisocyanatoisocyanurats mit einer mittleren NCO-Funktionalität von mehr als 3,5 und einer Viskosität von 4.000 mPas bis zu 50.000 mPas bei 20°C bis 50°C, gemessen in einem Rotationsviskosimeter gemäß DIN 53019, zur Herstellung von Oberflächenbeschichtungen mit einer Pendelhärte von mindestens 80 s, gemessen nach König.

In einer bevorzugten Ausführungsform der erfindungsgemäßen Verwendung weist das Polyisocyanatoisocyanurat eine Funktionalität von 4,0 bis 7,0 auf. Gute Ergebnisse lassen sich beispielsweise erzielen, wenn das Polyisocyanatoisocyanurat eine Viskosität von mehr als 8.000 mPas bis zu 30.000 mPas bei 20°C bis 50°C aufweist, gemessen in einem Rotationsviskosimeter nach DIN 53019.

In einer bevorzugten Ausführungsform weisen die Oberflächenbeschichtungen eine verbesserte Kratzbeständigkeit oder eine verbesserte Säurebeständigkeit gegenüber Oberflachenbeschichtungen auf, die mit nicht erfindungsgemäßen Polyisocyanaten hergestellt wurden. Die Kratzbeständigkeit und die Säurebeständigkeit werden dabei nach den im Rahmen dieses Textes beschriebenen Verfahren bewertet. Vorzugsweise weisen die Oberflächenbeschichtungen eine Säurebeständigkeit gemäß dem oben beschriebenen Säuretest von mindestens 25 bei 70°C auf

Die Erfindung wird nachfolgend durch Beispiele näher erläutert.

### Beispiele

### 1. Herstellung der Komponente A

Hexamethylendiisocyanat (HDI) wurde unter Stickstoffbedeckung vorgelegt und das Produkt auf 80 °C erhitzt. Man gab 400 Gew.-ppm (bezogen auf Diisocyanat) des Katalysators N,N,N-Trimethyl-N-(2-hydroxypropyl)ammonium-2-ethylhexanoat zu, ließ bei 80 °C reagieren und stoppte die Reaktion bei dem in Tabelle 1 genannten NCO-Gehalt des Rohprodukts durch Zugabe von 400 Gew.-ppm (bezogen auf Diisocyanat) Di-2-(Ethylhexyl)phosphat. Das Reaktionsgemisch wurde anschließend zur Entfernung vom monomerem HDI im Dünnschichtverdampfer bei 140°C Öltemperatur und vermindertem Druck (2.5 mbar) destilliert. Der HDI-Restmonomergehalt lag anschließend unter 0.3 Gew.%.

Daten zu den Endprodukten gehen aus Tabelle 1 hervor.

**Tabelle 1:**

| Komponente A, Produktdaten | | | | |
|---|---|---|---|---|
| **Polyisocyanat Nr.** | **NCO-Gehalt Rohprodukt (Gew.%)** | **NCO-Gehalt Endprodukt (Gew.%)** | **Visk. 23 °C (mPas)** | **Mittlere Funktiona- lität** |
| 1 | 37.3 | 21.4 | 4630 | 4.0 |
| 2 | 34.6 | 20.7 | 8100 | 4.3 |
| 3 | 34.2 | 20.5 | 9300 | 4.4 |
| 4 | 32.4 | 20.0 | 14800 | 4.6 |
| 5 | 32.2 | 19.8 | 16400 | 4.9 |
| 6 | 30.7 | 19.5 | 23700 | 5.1 |
| 7 | 29.0 | 18,9 | 26000 (30 °C) | 5.8 |
| 8 | 27.2 | 18.1 | 21600 (40 °C) | 6.5 |

### 2. Herstellung eines Acrylatharzes als Komponente B für einen Zweikomponenten-Klarlack

In einem 41-Edelstahlreaktor, ausgestattet mit Ölheizung, Innentemperaturmessung, Rückflußkühler, Rührer und zwei Dosiergefäßen wurden unter Überschleierung mit Stickstoff als Schutzgas 525 g Pentylacetat (Isomerengemisch) eingewogen und unter ständigem Rühren auf 140 °C aufgeheizt. Im ersten Dosiergefäß wurden 162 g einer Aromatenfraktion mit einem Siedebereich von 160 bis 174°C und 225 g tert.-Butylperethylhexanoat eingewogen und vorgemischt. Im zweiten Dosiergefäß wurden 207 g Ethylhexylacrylat, 462 g Ethylhexylmethacrylat, 360 g Cyclohexylmethacrylat, 858 g 2-Hydroxypropylmethacrylat und 6 g Acrylsäure eingewogen und vorgemischt.

Bei einer Lösemitteltemperatur im Reaktor von 140°C wurde mit dem Zulauf aus Dosiergefäß 1 begonnen. Die Zulaufmenge wurde so bemessen, daß das Gemisch aus Dosiergefäß 1 bei gleichmäßiger Dosierung innerhalb von 4,75 Stunden in das Reaktionsgefäß lief. Nach weiteren 15 Minuten wurde mit dem Zulauf aus dem zweiten Dosiergefäß begonnen. Die Zulaufgeschwindigkeit wurde so eingestellt, daß das Acrylatgemisch bei gleichmäßiger Dosierung 4,00 Stunden benötigte, um in den Reaktor zu gelangen. Die Temperatur wurde während der gesamten Dosierzeit bei 140°C gehalten. Nach Ende des Zulaufs aus Dosiergefäß 1 wurde das Reaktionsgemisch im Reaktor zwei Stunden bei 140°C gerührt. Das Reaktionsgemisch wurde anschließend auf 80°C abgekühlt und mit 195 g Pentylacetat (Isomerengemisch) auf einen nichtflüchtigen Anteil von 65,1 Gew.-% eingestellt. Die erhaltene Lösung hatte eine Säurezahl von 6,2 mg KOH/g bezogen auf den Polymergehalt, eine Viskosität, gemessen 60 %ig in Pentylacetat, von 575 mPas (gemessen in einem Rotationsviskosimeter gemäß DIN 53019, 23°C) und eine Molmasse (Zahlenmittel) von 3150 g/mol, bestimmt mittels GPC-Analyse.

### 3. Verwendung der Komponenten A und B in 2K-Polyurethan-Lacksystemen:

### 3.1 Stammlack

In ein Rührgefäß wurden eingewogen:
- 72 Gew.-Teile der unter Beispiel 2 hergestellten Acrylatharzlösung (Komponente B),
- 0,15 Gew.-Teile eines Polyether-modifizierten Polydimethylsiloxans, gelöst in 2,85 Gew.-Teilen Xylol,
- 1,5 Gew.-Teile eines substituierten Hydroxyphenylbenztriazols mit 1,0 Gew.-Teilen eines N-Methyl-2,2,6,6-tetramethylpiperidinyl-4-esters, gelöst in 5,0 Gew.-Teilen Methoxypropylacetat,
- 6,0 Gew.-Teile Butoxyethylacetat,
- 5,5 Gew.-Teile eines Aromatengemisches mit einem Siedebereich von 160 bis 174°C.

Das Gemisch wurde durch 30minütiges Rühren homogenisiert.

### 3.2 Herstellung eines handelsüblichen Polyisocyanat-Vernetzers (Vergleichsbeispiel unter Verwendung einer Vergleichskomponente A)

Es wurden 80 Gew.-Teile eines handelsüblichen Polyisocyanurates auf Basis von Hexamethylendiisocyanat mit einem NCO-%-Gehalt von 22,3 Gew.-% und einer Viskosität bei 23 °C von 3100 mPas (Vergleichskomponente A) in 10 Gew.-Teilen Butylacetat und 10 Gew.-Teilen eines Aromatengemisches mit dem Siedebereich von 160 bis 174 °C gelöst.

### 3.3 Herstellung eines Polyisocyanat-Vernetzers unter Verwendung der erfindungsgemäßen Komponente A

Es wurden 80 Gew.-Teile des erfindungsgemäßen Polyisocyanurats 3 (Tabelle 1) in 10 Gew.-Teilen Butylacetat und 10 Gew.-Teilen eines Aromatengemisches mit dem Siedebereich von 160 bis 174 °C gelöst.

### 3.4 Mischung von Stammlack und Polyisocyanat-Vernetzer

Kurz vor der Applikation wurde der Stammlack aus Beispiel 3.1 einmal im Verhältnis 100 : 30 Gew.-Teilen mit der Lösung eines Polyisocyanat-Vemetzers aus Beispiel 3.2 und weiterhin im Verhältnis 100 : 33 Gew.-Teilen mit dem erfindungsgemäßen Polyisocyanat-Vernetzer aus Beispiel 3.3 vermischt. Die Mischungen wurden mit Butylacetat auf eine Auslaufviskosität von 28 Sekunden im Auslaufbecher nach DIN 53211, bei 20 °C gemessen, eingestellt.

### 4 Applikation

Auf Stahltafeln aus Karosseriestahl, die mit handelsüblicher Zinkphosphatlosung vorbehandelt wurden und eine Schicht von 20 µm eines handelsüblichen kationisch abgeschiedenen Elektrotauchlacks und darauf eine Schicht von 35 µm eines handelsublichen Wasserfüllers aufwiesen, wurde mittels einer pneumatischen Spritzvorrichtung ein anthrazitfarbener, wäßriger Metallic-Basislack aufgetragen, so daß eine Trokenfilmdicke von 14µm entstand. Nach der Applikation des Basislackes wurde 10 Minuten bei 80 °C vorgetrocknet. Dann wurden jeweils die beiden Lackmischungen aus Beispiel 3.4 mittels einer pneumatischen Spritzvorrichtung auf den vorgetrockneten Basislack appliziert, so daß eine Trockenfilmdicke von 40 bis 43 µm entstand. Es wurde 5 Minuten bei Raumtemperatur ablüften gelassen. Dann wurden die Tafeln für 20 Minuten in einem Umluftofen bei 140 °C Umlufttemperatur behandelt. Die Tafeln wurden auf Raumtemperatur abgekühlt, für zwei Stunden gelagert und anschließend beurteilt.

### 5. Beurteilung

Verglichen wurden die Meßwerte des erfindungsgemäßen Klarlacks mit denen des Vergleichsbeispiels mit dem handelsüblichen Vernetzer:

| **Prüfmethode** | **Beispiel erfindungsgemäß** | **Vergleichs- beispiel** |
|---|---|---|
| Glanz (%, Gardner, 20°) | 83 | 83 |
| Pendelhärte (Sekunden, Konig) | 133 | 128 |
| Glanz nach Schwitzwassertest (240 Stunden 40 °C, 98% RLF) | 84 | 81 |
| Blasen nach Schwitzwassertest | m0g0 | m0g0 |
| Haftung nach Schwitzwassertest | 1,5 | 2,0 |
| Kratzfestigkeit Sandtest* (Glanz-differenz %) | 18,7 | 22,1 |
| Reflow-Verhalten bei 40 °C (verbleibende Glanzdifferenz %) | 18,7 | 17,4 |
| Reflow bei 60 °C (verbleibende Glanzdifferenz %) | 11,6 | 11,6 |
| Chemikalienbeständigkeit Säure-test** (Notensummen) 50 °C | 0 | 0 |
| 60 °C | 1 | 1,5 |
| 70 °C | 6,5 | 6,5 |
| 80 °C | 15,5 | 24,5 |

| | | |
|---|---|---|
| Anmerkungen: m = Menge g = Größe * = Sandtest Beim Sandtest wird die Lackoberfläche mit Sand belastet (20g Quarz-Silbersand 1.5-2.0 mm). Der Sand wird in einen PE-Becher (Boden plan abgeschnitten) gegeben, der fest auf der Prüftafel befestigt ist. Es werden die gleichen Prüftafeln wie oben beschrieben verwendet. Mittels eines Motorantriebes wird die Tafel mit dem Becher und dem Sand in Schüttelbewegungen versetzt. Die Bewegung des losen Sandes verursachen dabei die Beschädigung der Lackoberfläche (100 Doppelhübe in 22 s). Nach der Sandbelastung wird die Prüffläche vom Abrieb gereinigt, unter einem kalten Wasserstrahl vorsichtig abgewischt und anschließend mit Druckluft getrocknet. Gemessen wird der Glanz nach DIN 67530 vor und nach Beschädigung. | | |
| ** = Säuretest | | |

Der Säuretest dient der Ermittlung der Beständigkeit von Lackoberflächen gegen Säuren, Laugen und Wassertropfen. Dabei wird die Beschichtung auf einem Gradientenofen nach der Einbrennung weiteren Temperaturbelastungen ausgesetzt ( 30 min 40 °C, 50 °C, 60 °C und 70 °C). Zuvor werden die Testsubstanzen (Schwefelsäure 1%ig, 10%ig, 36%ig; schweflige Säure 6%ig; Salzsäure 10%ig; Natronlauge 5%ig; VE (=vollentsalztes) Wasser-1,2,3, bzw. 4 Tropfen) definiert mit einer Dosierpipette aufgebracht. Im Anschluß an die Einwirkung der Substanzen werden diese unter fließendem Wasser entfernt und die Beschädigungen nach 24 h entsprechend einer vorgegebenen Skala visuell beurteilt:

| **Benotung** | **Aussehen** |
|---|---|
| 0 | kein Defekt |
| 1 | leichte Markierung |
| 2 | Markierung/Vermattung/keine Erweichung |
| 3 | Markierung/Vermattung/Farbtonverände- |
| | rung/Erweichung |
| 4 | Risse/beginnende Durchätzung |
| 5 | Klarlack entfernt |

Es wurde jede einzelne Markierung (Spot) ausgewertet und das Ergebnis für jede Beschichtung in geeigneter Form (z. B. Notensummen für eine Temperatur) festgehalten.

### Bewertung:

Der Einsatz des erfindungsgemäßen Vernetzers erzeugte Klarlackoberflächen, die eine signifikant verbesserte Säurebeständigkeit und dabei ein nahezu identisches "Reflow-Verhalten" gegenüber dem Stand der Technik aufweisen. Die Kratzbeständigkeit war mindestens der des Klarlackes vergleichbar, der mit dem handelsüblichen Vernetzer erzeugt wurde. Bei erhöhten Temperaturen übertraf sie die Kratzbeständigkeit der gemäß dem Stand der Technik hergestellten Oberflächenbeschichtungen jedoch bei weitem.

## Patentansprüche

1. Zusammensetzung, enthaltend Komponenten A und B, wobei
a) mindestens ein Polyisocyanatoisocyanurat, in dem der Anteil an Allophanatgruppen zu Isocyanatgruppen weniger als 10 % beträgt, mit einer mittleren NCO-Funktionalität von mehr als 3,5 und einer Viskosität von 4.000 mPas bis zu 50.000 mPas bei 20 °C bis 50 °C, gemessen mit einem Rotationsviskosimeter nach DIN 53019 als Komponente A, und
b) mindestens eine Verbindung mit durchschnittlich mehr als 5 gegenüber Isocyanaten unter Harnstoff-, Urethan-, Thiourethan- oder Amidbildung reaktionsfähigen funktionellen Gruppen als Komponente B,
enthalten ist.

2. Zusammensetzung nach Anspruch 1, **dadurch gekennzeichnet, daß** Komponente A eine mittlere Funktionalität von 4,0 bis 7,0 aufweist.

3. Zusammensetzung nach Anspruch 2, **dadurch gekennzeichnet, daß** Komponente A eine mittlere Funktionalität von 4,2 bis 6,5 aufweist.

4. Zusammensetzung nach einem der Ansprüche 1, 2 oder 3, **dadurch gekennzeichnet, daß** als Komponente B ein Polyester, Polyacrylat, Polymethacrylat oder ein Gemisch aus zwei oder mehr davon enthalten ist.

5. Zusammensetzung nach einem der Ansprüche 1 bis 4, **dadurch gekennzeichnet, daß** Komponente B eine mittlere Funktionalität von mehr als 10 aufweist.

6. Zusammensetzung nach einem der Ansprüche 1 bis 5, **dadurch gekennzeichnet, daß** Komponente A bei 23 °C eine Viskosität von mindestens 8.000 mPas aufweist.

7. Verfahren zur Herstellung eines Oberflächenbeschichtungsmittels, enthaltend Komponente A und B, bei dem
c) mindestens ein Polyisocyanatoisocyanurat, in dem der Anteil an Allophanatgruppen zu Isocyanatgruppen weniger als 10 % beträgt, mit einer mittleren NCO-Funktionalität von mehr als 3,5 und einer Viskosität von 4.000 mPas bis zu 50.000 mPas bei 20 °C bis 50 °C als Komponente A, und
d) mindestens eine Verbindung mit durchschnittlich mehr als 5 gegenüber Isocyanaten unter Harnstoff-, Urethan-, Thiourethan- oder Amidbildung reaktionsfähigen funktionellen Gruppen als Komponente B,
vermischt werden.

8. Verwendung mindestens eines Polyisocyanatoisocyanurats, in dem der Anteil an Allophanatgruppen zu Isocyanatgruppen weniger als 10 % beträgt, mit einer mittleren NCO-Funktionalität von mehr als 3,5 und einer Viskosität von 4.000 mPas bis zu 50.000 mPas bei 20 °C bis 50 °C zur Herstellung von Oberflächenbeschichtungen mit einer Pendelhärte nach König von mindestens 80 s.

9. Verwendung nach Anspruch 8, **dadurch gekennzeichnet, daß** das Polyisocanatoisocyanurat eine Funktionalität von 4,0 bis 7,0 aufweist.

10. Verwendung nach einem der Ansprüche 8 oder 9, **dadurch gekennzeichnet, daß** das Polyisocyanatoisocyanurat eine Viskosität von mehr als 8.000 mPas bis zu 30.000 mPas bei 20 °C bis 50 °C aufweist, gemessen mit einem Viskosimeter nach DIN 53019.

11. Verwendung nach einem der Ansprüche 8 bis 10, **dadurch gekennzeichnet, daß** die Oberflächenbeschichtungen, die aus dem 2K-Lacksystem Polyurethan/Polyisocyanatoisocyanurat hergestellt werden, eine bessere Kratzbeständigkeit oder eine bessere Säurebeständigkeit oder beides aufweisen als solche Oberflächenbeschichtungen, die aus dem 2K-Lacksystem Polyurethan/Polyisocyanat hergestellt werden.

## Claims

1. A composition comprising components A and B, comprising
a) as component A at least one polyisocyanatoisocyanurate in which the proportion of allophanate groups to isocyanate groups is less than 10% and which has an average NCO functionality of more than 3.5 and a viscosity of more than 4 000 mPas up to 50 000 mPas at from 20°C to 50°C, measured with a rotational viscometer in accordance with DIN 53019, and
b) as component B at least one compound containing on average more than 5 functional groups which are reactive toward isocyanates with formation of urea, urethane, thiourethane or amide.

2. A composition as claimed in claim 1, wherein component A has an average functionality of from 4.0 to 7.0.

3. A composition as claimed in claim 2, wherein component A has an average functionality of from 4.2 to 6.5.

4. A composition as claimed in either of claims 1, 2 and 3, wherein component B comprises a polyester, polyacrylate, polymethacrylate or a mixture of two or more thereof.

5. A composition as claimed in any of claims 1 to 4, wherein component B has an average functionality of more than 10.

6. A composition as claimed in any of claims 1 to 5, wherein component A has a viscosity at 23°C of at least 8 000 mPas.

7. A process for preparing a surface coating composition comprising components A and B, wherein
c) at least one polyisocyanatoisocyanurate in which the proportion of allophanate groups to isocyanate groups is less than 10% and which has an average NCO functionality of more than 3.5 and a viscosity of from 4 000 mPas up to 50 000 mPas at from 20°C to 50°C, as component A, and
d) at least one compound containing on average more than 5 functional groups which are reactive toward isocyanates, with formation of urea, urethane, thiourethane or amide, as component B,
are mixed.

8. The use of at least one polyisocyanatoisocyanurate in which the proportion of allophanate groups to isocyanate groups is less than 10% and which has an average NCO functionality of more than 3.5 and a viscosity of from 4 000 mPas up to 50 000 mPas at from 20°C to 50°C to prepare surface coatings having a König pendulum hardness of at least 80 s.

9. The use as claimed in claim 8, wherein the polyisocyanatoisocyanurate has a functionality of from 4.0 to 7.0.

10. The use as claimed in either of claims 8 and 9, wherein the polyisocyanatoisocyanurate has a viscosity or more than 8 000 mPas up to 30 000 mPas at from 20°C to 50°C, measured with a viscometer in accordance with DIN 53019.

11. The use as claimed in any of claims 8 to 10, wherein the surface coatings produced from the polyurethane/polyisocyanatoisocyanurate 2-component coating system have a better scratch resistance or better acid resistance or both than surface coatings produced from the polyurethane/polyisocyanate 2-component coating system.

## Revendications

1. Composition contenant les composants A et B, qui contient,
a) en tant que composant A, au moins un polyisocyanate présentant une teneur en groupes allophanate inférieure à 10% par rapport à celle des groupes isocyanate, présentant une fonctionnalité NCO moyenne supérieure à 3,5 et une viscosité comprise entre 4 000 mPas et 50 000 mPas à une température comprise entre 20°C et 50°C, mesurée au moyen d'un viscosimètre rotatif selon DIN 53019, et
b) en tant que composant B, au moins un composé présentant en moyenne plus de 5 groupes fonctionnels réactifs envers les isocyanates en formant une urée, un uréthane, un thiouréthane ou un amide.

2. Composition selon la revendication 1, **caractérisée en ce que** le composant A présente une fonctionnalité moyenne comprise entre 4,0 et 7,0.

3. Composition selon la revendication 2, **caractérisée en ce que** le composant A présente une fonctionnalité moyenne comprise entre 4,2 et 6,5.

4. Composition selon l'une quelconque des revendications 1, 2 ou 3, **caractérisée en ce qu'**elle contient, en tant que composant B, un polyester, un polyacrylate, un polyméthacrylate ou un mélange de deux ou plusieurs de ces composés.

5. Composition selon l'une quelconque des revendications 1 à 4, **caractérisée en ce que** le composant B présente une fonctionnalité moyenne supérieure à 10.

6. Composition selon l'une quelconque des revendications 1 à 5, **caractérisée en ce que** le composant A présente, à une température de 23°C, une viscosité d'au moins 8 000 mPas.

7. Procédé pour la préparation d'un agent de revêtement de surface contenant les composants A et B, dans lequel on mélange
c) en tant que composant A, au moins un polyisocyanate présentant une teneur en groupes allophanate inférieure à 10% par rapport à celle des groupes isocyanate, présentant une fonctionnalité NCO moyenne supérieure à 3,5 et une viscosité comprise entre 4 000 mPas et 50 000 mPas à une température comprise entre 20°C et 50°C, et
d) en tant que composant B, au moins un composé présentant en moyenne plus de 5 groupes fonctionnels qui sont réactifs envers les isocyanates en formant une urée, un uréthane, un thiouréthane ou un amide.

8. Mise en oeuvre d'au moins un polyisocyanatoisocyanurate présentant une teneur en groupes allophanate inférieure à 10% par rapport à celle des groupes isocyanate, présentant une fonctionnalité NCO moyenne supérieure à 3,5 et une viscosité comprise entre 4 000 mPas et 50 000 mPas à une température comprise entre 20°C et 50°C, pour la préparation d'agents de revêtement de surface présentant une dureté déterminée au moyen d'une mesure d'amortissement de pendule selon König d'au moins 80 s.

9. Mise en oeuvre selon la revendication 8, **caractérisée en ce que** le polyisocanatoisocyanurate présente une fonctionnalité comprise entre 4,0 et 7,0.

10. Mise en oeuvre selon l'une quelconque des revendications 8 et 9, **caractérisée en ce que** le polyisocanatoisocyanurate présente une viscosité supérieure à 8 000 mPas et jusqu'à 30 000 mPas à une température comprise entre 20°C et 50°C, déterminé au moyen d'un viscosimètre selon DIN 53019.

11. Mise en oeuvre selon l'une quelconque des revendications 8 à 10, **caractérisée en ce que** les revêtements de surface que l'on a préparé à partir du type de vernis 2K polyuréthane/polyisocyanatoisocyanurate présentent une résistance aux rayures améliorée ou une résistance aux acides améliorée ou les deux, par rapport aux revêtements de surface que l'on a préparé à partir du type de vernis 2K polyuréthane/polyisocyanate.
